# EUROPEAN PATENT SPECIFICATION

(11) **EP 0 537 394 B1**
(45) Date of publication and mention of the grant of the patent: **23.06.1999**
(21) Application number: 91309568.3
(22) Date of filing: 17.10.1991
(51) Int. Cl.: H05B 41/29, H05B 41/16

(54) **An apparatus for driving a fluorescent light by periodically changing the applied DC polarity.**
Leuchtstofflampe oder Beleuchtungsgerät mit einer Vorrichtung zur periodischen Polaritätsumkehrung
Lampe fluorescente ou moyen d'éclairage avec un dispositif pour inverser périodiquement les bornes

(43) Date of publication of application: 21.04.1993
(73) Proprietor: Yang, Tai-Her, Taipei (TW)
(72) Inventor: Yang, Tai-Her, Taipei (TW)
(74) Representative: Arthur, Bryan Edward

(56) References cited:
- EP-A- 0 314 077
- DE-A- 3 609 582
- DE-C- 3 607 109
- FR-A- 2 645 393
- US-A- 5 004 953

## Description

The present invention relates to apparatus for driving a fluorescent light by supplying DC power, the polarity of which is changed. DE 3607109 discloses an apparatus for driving a fluorescent light by supplying DC power, the polarity of which is changed. In that document, the fluorescent light goes through four phases: a pre-heating phase, an ignition phase, an AC phase and an operating phase. Four switches T1, T2, T3 and T4 are used to control the polarity of the voltage applied to the fluorescent lamp. During the operating phase. switches T1 and T4 are both open, and switches T2 and T3 are both closed. Conversely, when switches T1 and T4 are closed, switches T2 and T3 are open. Thus, the polarity of the voltage applied to the fluorescent lamp through the switches alternates in polarity. However, during the ignition phase, the switches are operated differently so that the polarity of voltage applied to the fluorescent lamp does not switch between polarities.

The invention provides a means of periodic change and alternating tube power DC polarity for driving a fluorescent light or lighting device in order to provide high-steady lighting effect, and solve the defects of existing periodical pulsed illumination formed using AC power which is harmful to the eyes and negative pole unilateral loss of tube formed by fixed DC power. To solve these defects, conventional fluorescent lights are manually alternated in their polarity connection between tube and lamp holder on an irregular basis. However, it is troublesome and unreliable.

According to the present invention, an apparatus for driving a fluorescent light by supplying DC power, the polarity of which is changed, comprises a DC power supply unit for supply of DC power, switching means for switching the DC power, and a setting device for supplying pulse signals to the switching means to trigger the switching means to switch the DC power supplied to the light,
characterised in that the switching means is a polarity switch for periodically switching the polarity of the supplied DC power to the fluorescent light, the frequency of change of polarity being relatively higher during start-up of the light, and being relatively lower during normal operation and in that the setting device is a polarity setting device which supplies a relatively higher frequency pulse signal during start-up. and a relatively lower frequency pulse signal during normal operation. Other advantageous features are recited in claims 2 to 10.

Elements of the invention and its embodiments include :
A DC power supply unit: for the generation of DC power to drive fluorescent light, such DC including directly retified and filtered wave or DC power by high-frequency rectified;
A polarity Switch: formed by electrodynamic type relay or fixed type circuit for switching the polarity of DC power in positive or reversal connection with the sides of tube according to the instruction of polarity signal setting device;
A lighting apparatus comprising fluorescent tube, lamp holder, limiter, connect cord and cover;
A polarity Signal Setting Device: a random number generator that can form indefinite HIGH or LOW signal to drive the polarity exchanging switch setting-up the positive and negative polarities on respective end of light tube on the moment of power supply in accordance with the instant polarity of the power supply or the random signal of the electric arc or the clock signal itself; the clock itself could be fixed frequency or generate higher frequency exchanging polarity power supply mode for starting the tube directly so as to save a starter and then it could generate lower frequency exchanging polarity power supply mode for continuous illumination; on a long duration basis, the probability of the appearance of HIGH or LOW in the device is roughly equal.

The invention also may provide a change-over polarity control (manual or timing switch or free polarity or double-cutting progressive switch) for the whole lighting apparatus by means of a change-over polarity power supply device to form a periodic change polarity power supply lighting device for simultaneously driving the load of DC fluorescent strip light, lamp bulb, mercury lamp or air discharge light, arc light or the other lighting apparatus applicable to DC indefinite polarity power supply.

### BRIEF DESCRIPTION OF THE DRAWINGS

Fig 1 is a block diagram showing the principle of periodically changing and alternating light tube power reception DC Polarity driving fluorescent light or lighting apparatus.

Fig 2 is a diagram showing each block I/O point status.

### DETAILED DESCRIPTION OF THE INVENTION

Since the fluorescent strip light was invented, it has been widely applied due to its high-efficiency cool light which has the advantage of energy economy. Today there are two types of fluorescent strip light. one which uses AC power supply driving the light tube and the other which uses DC power supply driving the light tube. The former is the most commonly applied in houses, factories and public places. Though it is cheap and has electric-induction limiter for brightness change following AC power supply wave pulse, the effect is not optimal and results in a low power factor, heat loss and noise. Though DC fluorescent strip light provides good illuminating stability, it is not convenient because one side negative polar loss needs manual switching of the direction of tube. The invention provides a change of polarity DC fluorescent strip light or lighting apparatus to provide high-stability illumination in substitute of brightness periodic pulse formed by up-dated AC power supply being harmful to the eyes, and tube negative polar one-way loss resulted from fixed DC power supply. The description is accompanied by circuit block diagram of embodiments as follows:

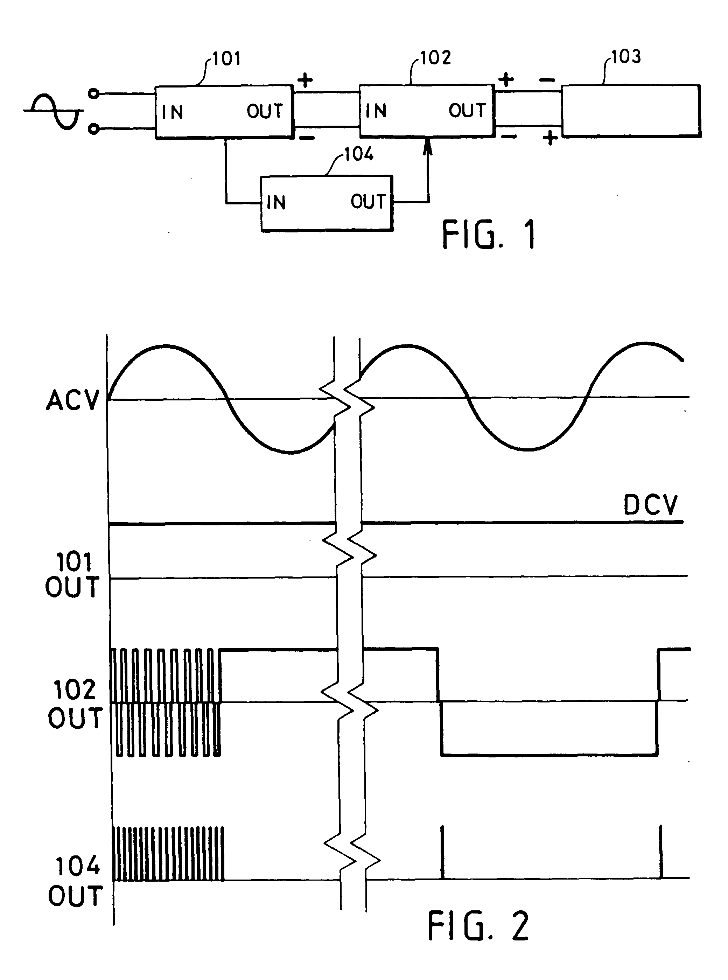

Referring to Fig 1, the principle of change-over periodic and alternating tube reception power DC polarity driving the fluorescent strip light is shown by block diagram having the following elements:
DC power supply unit 101: for the generation of DC power to drive a fluorescent light, such DC power including directly rectified and filtered wave or DC power by high-frequency rectified;
Polarity Switch 102: formed by electrodynamic type relay or fixed type circuit for switching the polarity of DC power in positive or reverse connection with the ends of tube according to the instruction of a polarity signal setting device;
Lighting apparatus 103 comprising fluorescent tube, lamp holder, limiter, connection cord and cover;
Polarity Setting Device 104 including a random number generator that can form indefinite pulse signals to drive the polarity switch to change the positive and negative polarities on respective ends of the light tube on the moment of power supply in accordance with the instant polarity of the power supply or the random signal of the electric arc or the clock signal itself. The clock itself could be fixed frequency or generate higher frequency exchanging polarity power supply mode for stating the tube directly so as to save a starter and then it could generate lower frequency exchanging polarity power supply mode for continuous illumination. On a long duration basis, the probability of the appearance of a positive or negative polarity in the device is roughly equal.

Referring to Fig 2, relevant I/O points to such polarity setting device is shown, wherein light tube power reception frequency is 5KHZ during starting. and is changed alternating power reception polarity once every 180 seconds after started. Both starting frequency and alternating frequency after started mentioned above are only examples of illustration, and these are controlled by polarity setting device 104. We can select suitable starting frequency and alternating power reception period after start-up to various kinds of lighting apparatus and properly modify its power reception wave or make alternating between frequencies reducing gradually.

With the designs described above, when high-frequency, alternating DC power supplied to the DC fluorescent light on the moment of AC power sent starts the light tube and then reduces alternating cycle to maintain the light tube power reception. because DC power is input without brightness pulse, or flicker, it is not harmful to the eyes, and has free signal setting device, and on a long duration basis, the probability of the appearance of POSITIVE or NEGATIVE in the device is roughly equal to prevent light tube from one-side ageing. Such change frequency and power polarity device also can provide change polarity power supply for the whole lighting equipment to form a change-over polarity power supply lighting system, and except fluorescent light set driven by DC power supply or high-frequency pulse DC power, it is also applicable to the other lighting apparatus including DC load such as opal lamp or mercury lamp or air discharge light, arc lamp, and the other applicable to DC indefinite polarity over supply load.

To conclude descriptions above, the invention discloses a DC fluorescent light or lighting apparatus using high-frequency periodic alternating to start light tube, and using lower-frequency periodic alternating light tube power reception polarity to continue the tube lighting in order to extinguish periodic twinkling phenomenon occurred in the light of updated fluorescent light driven by AC power supply as well as solve the defect of one-side negative polar loss occasioned on the conventional DC fluorescent light tube. It is effective to promote illuminating quality and to protect the eyes' health.

## Claims

1. Apparatus for driving a fluorescent light (103) by supplying DC power, the polarity of which is changed, the apparatus comprising:
a DC power supply unit (101) for supply of DC power,
switching means (102) for switching the DC power, and
a setting device (104) for supplying pulse signals to the switching means (102) to trigger the switching means (102) to switch the DC power supplied to the light (103),
characterised in that the switching means (102) is a polarity switch for periodically switching the polarity of the supplied DC power to the fluorescent light (103), the frequency of change of polarity being relatively higher during start-up of the light, and being relatively lower during normal operation and in that the setting device (104) is a polarity setting device which supplies a relatively higher frequency pulse signal during start-up, and a relatively lower frequency pulse signal during normal operation.

2. Apparatus according to claim 1, wherein the polarity setting device (104) includes means for gradually reducing the frequency of the relatively higher frequency pulse signal to the relatively lower frequency after start-up.

3. Apparatus according to claim 1 or claim 2, wherein the polarity setting device (104) includes a random signal generator for generating the pulse signals.

4. Apparatus according to claim 1 or claim 2, wherein the polarity setting device (104) includes a clock for generating the pulse signals.

5. Apparatus according to claim 4, wherein the clock is such as to generate pulse signals at one or more fixed frequencies.

6. Apparatus according to claim 5, wherein the clock is arranged to generate pulse signals at the relatively higher frequency, and the light (103) is started directly without the use of a starter.

7. Apparatus according to any one of claims 1 to 6, wherein the DC power supply unit (101) is arranged for direct rectification and filtration of an AC wave.

8. Apparatus according to any one of claims 1 to 7, wherein the polarity switch (102) includes an electrodynamic type relay.

9. Apparatus according to any one of claims 1 to 7, wherein the polarity switch (102) is a fixed type circuit.

10. Apparatus according to any one of claims 1 to 9, wherein the fluorescent light (103) includes a fluorescent tube.

## Patentansprüche

1. Vorrichtung zum Betreiben einer Leuchtstofflampe (103) durch Anlegen von Gleichstrom, dessen Polarität sich umkehrt, wobei die Vorrichtung aufweist:
Eine Gleichstromversorgungseinheit (101) zur Versorgung mit Gleichstrom,
eine Schalteinrichtung (102) zum Schalten des Gleichstroms und
eine Einstelleinrichtung (104) für ein Anlegen von Pulssignalen an die Schalteinrichtung (102), um die Schalt einrichtung (102) zu steuern, den an die Lampe (103) angelegten Gleichstrom zu schalten,
**dadurch gekennzeichnet,** daß die Schalteinrichtung (102) als ein Polarisationsschalter für ein periodisches Schalten der an der Leuchtstofflampe (103) anliegenden Polarität des Gleichstroms ausgebildet ist, wobei die Frequenz des Polarisationswechsels während der Startphase der Lampe vergleichsweise höher und während des Normalbetriebs vergleichsweise niedriger liegt, und daß die Einstelleinrichtung (104) als ein Polaritätswechsler ausgebildet ist, der ein Pulssignal mit einer während der Startphase vergleichsweise höheren Frequenz und mit einer während des Normalbetriebs vergleichsweise niedrigeren Frequenz anlegt.

2. Vorrichtung nach Anspruch 1, **dadurch gekennzeichnet**, daß die Polarisationseinstelleinrichtung (104) Mittel einschließt, um schrittweise die vergleichsweise höhere Frequenz des Pulssignals auf die vergleichsweise niedrigere Frequenz nach der Startphase zu reduzieren.

3. Vorrichtung nach Anspruch 1 oder Anspruch 2, **dadurch gekennzeichnet,** daß die Polarisationseinstelleinrichtung (104) einen Zufallszahlengenerator zum Erzeugen der Pulssignale enthält.

4. Vorrichtung nach Anspruch 1 oder Anspruch 2, **dadurch gekennzeichnet,** daß die Polarisationseinstelleinrichtung (104) eine Uhr zum Erzeugen der Pulssignale enthält.

5. Vorrichtung nach Anspruch 4, **dadurch gekennzeichnet,** daß die Uhr zur Erzeugung von Pulssignalen mit einer oder mit mehreren festen Frequenzen ausgelegt ist.

6. Vorrichtung nach Anspruch 5, **dadurch gekennzeichnet,** daß die Uhr derart angeordnet ist, daß sie Pulssignale mit der vergleichsweise höheren Frequenz erzeugt, und die Lampe (103) direkt ohne Verwendung eines Starters gestartet wird.

7. Vorrichtung nach einem der Ansprüche 1 bis 6, **dadurch gekennzeichnet,** daß die Gleichstromversorgungseinheit (101) ausgelegt ist, eine Wechselstromwelle direkt gleichzurichten und zu filtern.

8. Vorrichtung nach einem der Ansprüche 1 bis 7, **dadurch gekennzeichnet,** daß der Polarisationsschalter (102) ein elektrodynamisches Relais aufweist.

9. Vorrichtung nach einem der Ansprüche 1 bis 7, **dadurch gekennzeichnet,** daß der Polarisationsschalter (102) eine feststehende Schaltung aufweist.

10. Vorrichtung nach einem der Ansprüche 1 bis 9, **dadurch gekennzeichnet,** daß die Lampe (103) eine Leuchtstoffröhre aufweist.

## Revendications

1. Dispositif pour activer une lampe fluorescente (103) par envoi d'une énergie à courant continu, dont la polarité est modifiée, le dispositif comprenant :
une source d'alimentation en énergie à courant continu (101) servant à délivrer une énergie à courant continu,
un moyen de commutation (102) pour commuter l'énergie à courant continu, et
un dispositif de réglage (104) pour envoyer des signaux impulsionnels aux moyens de commutation (102) pour déclencher les moyens de commutation (102) pour qu'ils commutent l'énergie à courant continu envoyée à la lampe (103),
caractérisé en ce que le moyen de commutation (102) est un commutateur de polarité servant à commuter périodiquement la polarité de l'énergie à courant continu envoyée à la lampe fluorescente (103), la fréquence de changement de la polarité étant relativement plus élevée pendant le démarrage de la lampe et étant relativement plus faible pendant le fonctionnement normal, et en ce que le dispositif de réglage (104) est un dispositif de réglage de polarité, qui envoie un signal impulsionnel à fréquence relativement plus élevée pendant le démarrage et un signal impulsionnel à fréquence relativement plus faible pendant le fonctionnement normal.

2. Dispositif selon la revendication 1, dans lequel le dispositif (104) de réglage de la polarité comprend des moyens pour réduire graduellement la fréquence du signal impulsionnel à fréquence relativement plus élevée pour l'amener à la fréquence relativement plus faible après le démarrage.

3. Dispositif selon la revendication 1 ou la revendication 2, dans lequel le dispositif (104) de réglage de la polarité comprend un générateur de signaux aléatoires servant à produire les signaux impulsionnels.

4. Dispositif selon la revendication 1 ou la revendication 2, dans lequel le dispositif (104) de réglage de la polarité comprend une horloge pour produire les signaux impulsionnels.

5. Dispositif selon la revendication 4, dans lequel l'horloge est agencée de manière à produire des signaux impulsionnels à une ou plusieurs fréquences fixes.

6. Dispositif selon la revendication 5, dans lequel le signal d'horloge est agencé de manière à produire des signaux impulsionnels à la fréquence relativement plus élevée, et la lampe (103) démarre directement sans l'utilisation d'un starter.

7. Dispositif selon l'une quelconque des revendications 1 à 6, dans lequel l'unité d'alimentation en énergie à courant continu (101) est agencée de manière à exécuter un redressement direct et un filtrage d'une onde à courant alternatif.

8. Dispositif selon l'une quelconque des revendications 1 à 7, dans lequel le commutateur de polarité (102) comprend un relais de type électrodynamique.

9. Dispositif selon l'une quelconque des revendications 1 à 7, dans lequel le commutateur de polarité (102) est un circuit de type fixe.

10. Dispositif selon l'une quelconque des revendications 1 à 9, dans lequel la lampe fluorescente (103) comprend un tube fluorescent.
